# EUROPEAN PATENT APPLICATION

(11) **EP 2 546 318 A1**
(43) Date of publication of application: **16.01.2013**
(21) Application number: 11789301.6
(22) Date of filing: 18.05.2011
(51) Int. Cl.: C09J 103/02, A23L 1/0522

(54) **FOOD GLUE**

(30) Priority: 01.06.2010 ES 201030838
(71) Applicant: Romero Busque, Olga, 31500 Tudela (ES); Fernandez De Muniain Comajuncosa, Rafael Alfredo, 31500 Tudela (ES)
(72) Inventor: Romero Busque, Olga, 31500 Tudela (ES); Fernandez De Muniain Comajuncosa, Rafael Alfredo, 31500 Tudela (ES)
(74) Representative: Ezcurra Zufia, Maria Antonia
(86) International application number: PCT/ES2011/070359
(87) International publication number: WO 2011/151495

(57) **Abstract**

The present invention relates to a method of manufacturing an edible glue comprising preparing a solution of starches, the preparation of a solution of preservatives, the mixing of the solution of preservatives to the solution of starches, the preparation of a solution of organic acids and the mixing of the organic acid mixture to the mixture of starches and preservatives, giving an edible glue comprising a mixture of starch, a mixture of organic acids, a mixture of preservatives and water.

## Description

### OBJECT OF THE INVENTION

The present invention relates to edible glue made from a solution of different starches, a solution of organic acids, a solution of preservatives and water. The present invention provides both formulation and method of producing the same. In addition to its adhesive properties, the edible glue formulation does not represent any risk to the consumer's health and its shelflife is of six months once the packaging is opened.

### BACKGROUND OF THE INVENTION

Since ancient times man has used and sought adhesives in many ways. The scope has expanded from natural to synthetic glues, from glues made from sugar to inorganic cements, plastic epoxies, polyurethane or even acrylics. According to the book "Handbook of Adhesives and Sealants" by Edward M. Petrie, natural organic adhesives are known to have a base of sugar, starch or dextrin, mainly used in paste paper products. These adhesives are easy to obtain, are low in cost, easy to apply and can be edible, especially the majority of sugar-based glue.

It is known that starch glue is white or lightly colored, supplied in dry powder form or in aqueous solution. The viscosity range from fluid to very rigid, depends on the composition of the glue. It is usually an adhesive slow to dry and with good resistance to moisture. Apart it is insoluble in oils and fats, nontoxic and biodegradable.

Several ways of obtaining starch-based glue have been described. The majority coming from the cooking of seeds with a high starch content (as for example oats, rice, etc.) in water in order to obtain a paste. In order to obtain a more liquid adhesive from the paste formed by the previous process, this can be treated with a basic or acid treatment or by oxidation. In the acid treatment, it is usually added an aqueous mineral acid to the mixture of starches at a temperature of between 49 ° C and 54 ° C. Then the formed pulp is neutralized with a base. In In the basic treatment the starch is heated in an alkaline solution with additives such as borax (or sodium borate) or caustic soda (sodium hydroxide).

In the book "Industrial Uses of Starch and Its Derivatives", JA Radley specifies the use of organic acids in the treatment of starches to obtain a higher percentage of starch from the seeds.

An example described in this book for this procedure is given by Klopfer, mixing rice starch with 0.5% of lactic acid and at the end of the treatment, the resulting mixture is centrifuged and dried. And another example is given by Duryea, suspending the starch in 1-2% of aqueous sulfuric acid and maintaining the temperature at 45 ° C for 1 to 4 hours and in the end neutralizing the acid, filtering and drying the same product.

More recently, in document MX2008003023 an edible glue has been described. This invention comprises a bonding agent (including lipids, medium chain triglyceride oils, emulsifiers and mixtures thereof) and a powdered ingredient (including edible acid, edible base, vitamins, minerals, etc.). As the glue is applied to a straw, first the bonding agent is applied, followed by the powdered ingredient within the straw.

At present no document has been found to describe the combination of a starch school glue with organic acids to obtain a mixture with an acidic pH which restricts the growth of microorganisms and can be ingested without any harmful effects to health while it retains its adhesive properties.

### DESCRIPTON OF THE INVENTION

The present invention provides a method for obtaining an edible glue, and its formulation which comprises a solution of starches, a solution of organic acids and a solution of preservatives.

The steps involved in the manufacturing method of this glue include:
- The preparation of a solution of starches in water as only solvent,
- The preparation of a preservative solution in water separately,
- The mixing of both solutions: preservatives and starches,
- The preparation of a solution of organic acids in water separately,
- And finally mixing the solution of starches and preservatives with the solution of organic acids to give an adhesive.

Final pH of the resulting mixture has to be below 4,2 so the edible glue has a primary life of at least two years and a secondary life of six months. Furthermore the mixture can be sterilized in an sterilizer to kill the microorganisms that may be present in the final product.

Thus, the glue obtained comprises a solution of starches, a solution of organic acids, a solution of preservatives and water, its pH is below 4.2 and can be sterilized. This formulation, has a shelf life in its primary packaging of two years, secondary life (once opened de primary packaging) of six months. If the glue is ingested by kids it is not harmful to health in any way.

The resulting glue can be used either as school glue with capacity for gluing paper, cardboard and wood, and especially focused to be used by children, or either as sticky glue to be used in food such cakes, snacks and ready meals, among many possibilities.

Any of the embodiments result of the dependent claims 2 to 17 and of the edible glue claimed in claims 19 to 23, is considered incorporated herein by reference

### DESCRIPTION OF THE FIGURES

The present invention is illustrated with the drawings attached herein as illustrative examples of the invention and are not to be construed to limit the invention in any way.

The drawing 1 illustrates a preferred example for manufacturing the glue where the mixture of starches is produced in the main tank of the homogenizer (1). In the first instance the main tank is filled with the quantity of water on the indicated proportions and subsequently heated to about 60 ° C. The starch or blend of starches is slowly added to the water with constant stirring until the solution is aggregate free and homogeneous.

Next a mixture of preservatives is added to the solution of starches previously prepared. This mixture of preservatives can be added directly to the main tank (1) or can be drawn apart in a second vessel (2) and then added to the main tank slowly (1) through a valve (2.1).

Finally a third vessel (3) is filled with the amount of water required to produce the organic acid solution and heated to about 60 ° C. The organic acids are poured into the water with constant stirring until the solution is aggregate free and homogeneous.

Then the solution of organic acids is sucked through a vacuum pump (3.1) and mixed with the solution of starches and preservatives and again constantly stirred and recirculated until a homogenous smooth mixture with a final pH below 4.2 is formed.

The procedure or the way to add the different products over the others may vary depending on the machinery available.

### PREFERRED EMBODIMENT OF THE INVENTION

The preparation of the edible glue preferably comprises the following steps:
1. Preparation of a solution of starch or mixture of different starches.
2. Preparation of a solution of preservatives.
3. Mixing of both solutions previously prepared (preservatives and starches).
4. Preparation of a solution of one or different organic acids.
5. Mixing the organic acid mixture with the mixture of preservatives and the mixture of preservatives.

The solution of starches is prepared with about 70% of the total water required to produce the glue formulation and with about 10% to 50% of one or different starches chosen from the group consisting of corn starch, wheat starch, rye starch, oat starch, barley starch, starch potato or tapioca starch, pea starch. It is preferably made from corn starch. The solution is constantly stirred and recirculated until it is aggregate free and smooth. The time taken to dissolve depends on the water temperature and the shear force, and may vary from 2 minutes if the water is heated to about 60 and 80 ° C to 5 minutes if the water is at room temperature. If water is to be at room temperature the shear force of the mixing should be at about 3000 rpm.

The solution of preservatives which comprises 0.1% of the total formulation weight can be made together with the solution of starches or separately. If it is prepared together with the solution of starches, the mixture of preservatives comprising 74% of sodium sorbate and 36% of potassium benzoate is dissolved and stirred for about 1 minute in the starch solution. If prepared separately, the different preservatives are dissolved in part of the water intended for the starch solution (that is, for example, a 10% of the total water is used to prepared the preservatives solution whereas the other 60% of the water is used to prepare the starch solution, and finally both solutions are mixed together). On this occasion the water is preferably at 20 ° C and is mixed for 20 minutes to a smooth and homogeneous blend. Once both preservatives and starch solutions have to be mixed they will have to be at the same temperature.

The organic acid solution is prepared in 30% of the total water contained in the final formulation. The preparation of this solution requires between 1 to 10% of one or different organic acids such as citric acid, lactic acid, acetic acid, ascorbic acid, malic acid or tartaric acid. Preferably a mixture of citric acid and lactic acid and preferably at equal percentage. The amount and concentration of acids required can be calculated by any person skilled in the art, so that the final solution has a pH below 4.2. The solution is stirred and recirculated until the solution is aggregate free and homogeneous. The time taken to prepare this solution depends on water temperature and can vary from 2 minutes, if the water is between 60 and 80 ° C, to 5 minutes if the water is at room temperature.

Once the solutions are ready they are mixed together. The solution of organic acids is slowly added to the solution of starches, which already contains the solution of preservatives, in order to prevent formation of lumps and crystals due to the acidification of the mixture. The mixing is preferably done in a homogenizer at approximately 10kg/min with an agitation rate between 600 and 1000rpm. The solution of organic acids is preferably added using a vacuum pump prepared to achieve the proper pressure. Once the entire solution has been added the vacuum is stopped and rapid recirculation is restarted and maintained for at least 2 minutes. At this point the glue is obtained.

It is preferable to dose the product in autoclavable containers in order to sterilize the glue and obtain a long expiration date product.

This sterilization process is performed with the product in autoclavable containers and subjecting them to a temperature of 120 ° C and a pressure of 1 atm for 20 to 30 minutes. The edible glue has now a shelf life of at least two years on the shelf if the container is closed, and at least 6 months once the container I opened.

Optionally, in order to obtain a product with an even longer shelf life, the product can be cooled down through a blast chilling process which takes the product at a temperature below 10 ° C in the least possible time.

Ultimately, the sterilized containers are fitted in a box for transport.
Table 1. Summarizes the percentages of each mixture according to a preferred embodiment of the invention and an even more preferably example of the invention, prepared for 100kg of food glue.

**Table 1: Percentages of each component of each solution according to a preferred embodiment of the invention generally and according to a preferred embodiment of the invention where a 100kg of food glue is prepared.**

| **Ingredients** | **Percent** | **Example** |
|---|---|---|
| Starch Mixture | 10-50% | 20Kg |
| Mixture of organic acids | 1-10% | 5kg |
| preservative mixture | 0.1 % | 100g |
| Water | CSP 100% | 74.9 kg |

In Table 2 summarizes the stirring and recirculation times for preparing each solution depending on water temperature and according to a preferred embodiment of the invention.

**Table 2: Recirculation and agitation times to prepare each of the solutions depending on water temperature and according to a preferred completion of the invention.**

| **Stage** | **ambient water temp** | **water temp 60-80 ° C** |
|---|---|---|
| Preparation of the mixture of starches | 5 minutes | 2 minutes |
| Mixing the mixture of preservatives with the mixture starch | 1 minute | 1 minute |
| Preparation of the mixture of organic acids | 5 minutes | 2 minutes |
| Mixing the mixture | 2 minutes | 2 minutes |

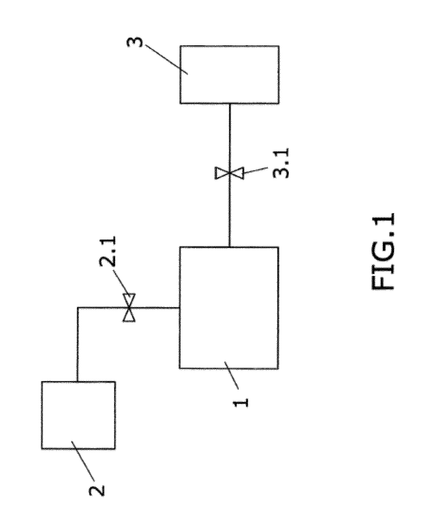

Figure 1 illustrates a preferred completion of the invention which is not to be construed to limit the invention in any way, and that comprises:
1) A stage to develop main phase. In the main container of the homogenizer (1) 44.94 Kg of water are added (60% of total formulation water) preferably distilled. Water is heated to 60 ° C and 20kg of corn starch as preferred, but never restricted, are added to the container. The solution is agitated and recirculated at maximum speed for 2 minutes. The container is then opened and the solution checked to verify that is smooth and homogeneous.
2) A step of preparing the solution of preservatives. In an additional vessel (2) mixing 7.49 kg of water at 20 ° C (10% of total formulation water which, together with the solution of starches, make the 52.43 kg given in Table 1) with 100gr of a mixture of preservatives comprising 74gr (74%) sodium salt and 36gr sorbate (36%) of benzoate salt. Mixed for 20 minutes and heated at 60 ° C in order to add it through a valve to the main container (1) with the solution of starches already prepared (2.1).
3) A step of preparing the solution of organic acids. In a third vessel (3) 22.47 kg of water are added (30% of the total water of the final product as specified in Table 1), preferably distilled water, and heated at 60 ° C. 5kg of a mixture of citric acid and lactic acid are added so final pH is below 4.2 and recirculated and stirred for 2 minutes.
4) A step of mixing of the phases. It is now activated the vacuum pump and once it reaches the required pressure, the suction tap is opened(3.1) for slowly mixing the organic acid solution with the solution of starches and preservatives. When applying the vacuum, recirculation in the main container stops (1) until it starts sucking the solution of organic acids. Once the entire solution of organic acids is added, the shutoff valve closes, and the vacuum is stopped and followed by a rapid recirculation for 2 minutes.
5) A step of dosing of the final mixture in autoclavable containers.
6) A step of sterilizing the containers filled with the final product in an autoclave for 30 minutes at 120 ° C and a pressure of 1 atm.
7) A step of introducing containers into boxes for transport.

## Claims

1. Method of manufacturing an edible glue comprising a solution of one or more starches, a solution of one or more organic acids, a solution of preservatives and only water as solvent, wherein it comprises the following steps:
a. Preparing a solution of starches;
b. Preparing a solution of preservatives;
c. Mixing both solutions preservatives and starches;
d. Preparing a solution of organic acids, and
e. Mixing the solution of organic acids together with the solution of starches and preservatives.

2. Method of manufacturing an edible glue according to claim 1, wherein the preparation of the solution of starches is performed with a mixture of one or more starches chosen from the group of corn starch, wheat starch, rye starch, oat starch, barley starch, potato starch, tapioca starch or pea starch, preferably chosen as corn starch, in which the / the starch (s) comprises (n) from 10% to 50% of final product weight.

3. Method of manufacturing an edible glueaccording to Claim 2, characterized because the preparation of the starches solution is preferably carried out with corn starch which comprises a proportion preferably between 10% to 20% by weight of the final product.

4. Method of manufacturing an edible glue according to any of Claims 2 or 3, characterized because the preparation of the solution of starches is performed in a 70% of the total water formulation, at a temperature of between 60 ° C and 80 ° C and stirred while adding the mixture of starches to the water during 2 minutes.

5. Method of manufacturing an edible glue according to any of Claims 2 or 3, characterized because the preparation of the starches solution is performed in a 70% of total water formulation, at room temperature, mixing at 3000rpm for 5 minutes.

6. Method of manufacturing an edible glue according to claim 1, wherein the preparation of the solution of preservatives is done separately and comprises about 0.1% of the total formulation weight and is prepared with 74 % of sodium sorbate and 36% of potassium benzoate, dissolved in water under stirring preferably for 20 minutes at 20 °C or heating the solution to 60 to 80 ° C depending on the temperature of the solution of starches.

7. Method of manufacturing an edible glue according to claim 1, wherein the mixing of the solution of preservatives and the solution of starches is performed with both solutions at the same temperature and is stirred for 1 minute.

8. Method of manufacturing an edible glue according to claim 1, wherein the preparation of the solution of preservatives is performed with a mixture of 74% sodium sorbate and 36% potassium benzoate, dissolved directly in the solution of starches, and stirred for one minute.

9. Method of manufacturing an edible glue according to claim 1, wherein the preparation of the solution of organic acids is performed with a mixture of one or more organic acids chosen from citric acid, lactic acid, acetic acid, ascorbic acid, malic acid or tartaric acid, which preferably is a mixture of citric acid and lactic acid, in which the / the acid (s) comprise (s) between 1% to 10% by weight of the final product.

10. Method of manufacturing an edible glue according to claim 9, wherein the preparation of the solution of organic acids is performed by dissolving a mixture of one or more organic acids in its salt form in 30% of the total water formulation at a temperature between 60 ° C to 80 ° C, while stirring the water for 2 minutes.

11. Method of manufacturing an edible glue according to claim 9, wherein the preparation of the solution of organic acids is performed by dissolving a mixture of one or more organic acids in its salt form in 30% of the total water formulation, at room temperature, while stirring the water for 5 minutes.

12. Method of manufacturing an edible glue according to claim 1, wherein the mixing of the solution of organic acids with the solution of preservatives and starches is preferably performed using a vacuum pump at about of 10kg/min and stirred between 600 and 1000rpm in the main container and once the total solution of organic acids has been added the final formulation is agitated for 2 minutes.

13. Method of manufacturing an edible glue according to any of claims 1 to 12, characterized because the final product has a pH below 4.2.

14. Method of manufacturing an edible glue according to claim 1, wherein further the final product is dosed into autoclavable containers.

15. Method of manufacturing an edible glue according to Claim 14, characterized because autoclavable containers filled with the final product can be subjected to sterilization in an autoclave at 120 ° C and 1 atm for 20 to 30 minutes.

16. Method of manufacturing an edible glue according to Claim 15, characterized because further cooling of the sterilized product is carried out in a blast chiller to a temperature below 10 ° C.

17. Method of manufacturing an edible glue according to any of Claims 15 to 16, characterized because further containers are packed with the final product in a container or box for shipping.

18. An edible glue comprising:
a. Water as only solvent
b. A mixture of one or more edible starches;
c. A mixture of one or more edible organic acids;
d. A mixture of edible preservatives.

19. An edible glue according to claim 18, wherein the edible starch mixture comprises one or more starches chosen from corn starch, wheat starch, rye starch, oat starch, barley starch, potato starch, starch or tapioca starch, pea, which is preferably corn starch and which comprises a proportion preferably between 10% and 50% by weight of the final product.

20. An edible glue according to claim 19 wherein the mixture of starches comprises between 10% and 20% by weight of the final product.

21. An edible glue according to claim 18 wherein the preservative mixture comprises a mixture of 0.1 % by total weight of the final product and comprises a 74% sodium sorbate and 36% potassium benzoate.

22. An edible glue according to claim 18, wherein the organic acid mixture comprises one or more organic acids chosen from citric acid, lactic acid, acetic acid, ascorbic acid, malic acid or tartaric acid, which preferably is a mixture of citric acid and lactic acid, and the mixture comprises between 1% and 10% by weight of the final product.

23. An edible glue according to any of Claims 18 to 22 characterized because its pH is below 4.2.
